# EUROPEAN PATENT APPLICATION

(11) **EP 4 716 122 A1**
(43) Date of publication of application: **25.03.2026**
(21) Application number: 23936961.4
(22) Date of filing: 15.05.2023
(51) Int. Cl.: H04L 1/00

(54) **INFORMATION SENDING METHOD AND APPARATUS, INFORMATION ACQUIRING METHOD AND APPARATUS, DEVICE, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); LU, Wei, Beijing 100085 (CN)
(74) Representative: Zimmermann, Tankred Klaus
(86) International application number: PCT/CN2023/094383
(87) International publication number: WO 2024/234274

(57) **Abstract**

Embodiments of the present disclosure disclose an information sending method and apparatus, an information acquiring method and apparatus, a device, and a storage medium, which can be applied to a communication system. The method comprises: a first network element sending authorization and/or privacy verification information to a second network element to send the authorization and/or privacy verification information to a terminal by means of the second network element, wherein the authorization and/or privacy verification information is used by the terminal to perform authorization and privacy verification for ranging or sidelink (SL) positioning. By implementing the method of the present disclosure, the terminal can be enabled to efficiently obtain information supporting its authorization and/or privacy verification.

## Description

### TECHNICAL FIELD

The present disclosure relates to the field of communication technologies, and in particular relates to an information sending method, an information acquiring method, an information sending apparatus, an information acquiring apparatus, a device, and a storage medium.

### BACKGROUND

Some applications of a sidelink (SL) may be ranging or SL positioning. SL positioning refers to estimating the location of a terminal being located based on the SL. For example, ranging or SL positioning may be performed on the terminal being located based on information from a terminal (e.g., a located user equipment (UE), an SL reference UE, an SL positioning server UE, a target UE for ranging based services and SL positioning, or the like). The reference terminal may be an SL reference terminal whose location is known or may be known in ranging or SL positioning.

During the ranging or SL positioning, the terminal needs to be supported to perform authorization and/or privacy verification. For example, the terminal may be supported to perform the authorization and/or privacy verification based on certain information. In related technologies, the terminal cannot effectively obtain information that supports the terminal to perform the authorization and/or privacy verification.

### SUMMARY

The embodiments of the present disclosure provide an information sending method, an information acquiring method, an information sending apparatus, an information acquiring apparatus, a device, a chip system, a storage medium, a computer program, and a computer program product, which may be applied in the field of communication technologies, enabling the terminal to effectively obtain information that supports the terminal to perform authorization and/or privacy verification.

In a first aspect, embodiments of the present disclosure provide an information sending method, performed by a first network element and including: sending authorization and/or privacy verification information to a second network element, where the authorization and/or privacy verification information is used by a terminal to perform authorization and privacy verification for ranging or SL positioning.

In a second aspect, embodiments of the present disclosure provide an information sending method, performed by a second network element and including: sending authorization and/or privacy verification information to a terminal, where the authorization and/or privacy verification information is used by the terminal to perform authorization and privacy verification for ranging or SL positioning.

In a third aspect, embodiments of the present disclosure provide an information sending method, performed by a third network element and including: sending authorization and/or privacy verification information to a first network element or a fourth network element, where the authorization and/or privacy verification information is used by a terminal to perform authorization and privacy verification for ranging or SL positioning, and the first network element has subscribed to a change notification for the authorization and/or privacy verification information.

In a fourth aspect, embodiments of the present disclosure provide an information acquiring method, performed by a fifth network element and including: generating or updating authorization and/or privacy verification information, where the authorization and/or privacy verification information is used by a terminal to perform authorization and privacy verification for ranging or SL positioning.

In a fifth aspect, embodiments of the present disclosure provide a communication device, having the functions of implementing some or all of the functions of the network elements in the methods described above. For example, the functions of the communication device may have the functions in some or all of the embodiments of the present disclosure, or may have the functions of implementing any one of the embodiments in the present disclosure alone. The functions may be implemented by hardware, or by hardware executing corresponding software. The hardware or software includes one or more units or modules corresponding to the above functions.

Optionally, in an embodiment of the present disclosure, the communication device may include a transceiver module and a processing module. The processing module is configured to support the communication device to perform corresponding functions in the methods described above. The transceiver module is configured to support the communication between the communication device and other devices. The communication device may further include a storage module, which is coupled to the transceiver module and the processing module and stores desired computer programs and data for the communication device.

As an example, the processing module may be a processor, the transceiver module may be a transceiver or a communication interface, and the storage module may be a memory.

In a sixth aspect, embodiments of the present disclosure provide another communication device, having the functions of implementing some or all of the functions of the terminal in the methods described above. For example, the functions of the communication device may have the functions in some or all of the embodiments of the present disclosure, or may have the functions of implementing any one of the embodiments in the present disclosure alone. The functions may be implemented by hardware, or by hardware executing corresponding software. The hardware or software includes one or more units or modules corresponding to the above functions.

Optionally, in an embodiment of the present disclosure, the communication device may include a transceiver module and a processing module. The processing module is configured to support the communication device to perform corresponding functions in the methods described above. The transceiver module is configured to support the communication between the communication device and other devices. The communication device may further include a storage module, which is coupled to the transceiver module and the processing module and stores desired computer programs and data for the communication device.

In a seventh aspect, embodiments of the present disclosure provide a communication device, which includes a processor. When the processor calls a computer program in a memory, the methods described above are performed.

In an eighth aspect, embodiments of the present disclosure provide a communication device, which includes a processor and a memory having stored therein a computer program. The processor executes the computer program stored in the memory to cause the communication device to perform the methods described above.

In a ninth aspect, embodiments of the present disclosure provide a communication device, which includes a processor and an interface circuit configured to receive code instructions and transmit the code instructions to the processor. The processor is configured to run the code instructions to cause the communication device to perform the methods described above.

In a tenth aspect, embodiments of the present disclosure provide a communication device, which includes one or more processors. The processors are configured to call instructions to cause the communication device to perform the methods described above.

In an eleventh aspect, embodiments of the present disclosure provide a communication system, which includes the communication device described in the sixth aspect, or the communication device described in the seventh aspect, or the communication device described in the eighth aspect, or the communication device described in the ninth aspect, or the communication device described in the tenth aspect.

In a twelfth aspect, embodiments of the present disclosure provide a computer-readable storage medium for storing instructions used by the above-mentioned network elements or terminal that, when executed, cause the network elements or terminal to perform the methods described above.

In a thirteenth aspect, the present disclosure further provides a computer program product including a computer program that, when run on a computer, causes the computer to perform the methods described above.

In a fourteenth aspect, the present disclosure provides a chip system, including at least one processor and an interface for supporting a network element to implement the functions involved above, for example, determining or processing at least one of data or information involved in the method described above.

In a possible design, the chip system further includes a memory, which is configured to store desired computer programs and data for the network element. The chip system may be composed of chips, or may include chips and other discrete devices.

In a fifteenth aspect, the present disclosure provides a chip system, including at least one processor and an interface for supporting a terminal to implement the functions involved above, for example, determining or processing at least one of data or information involved in the method described above.

In a possible design, the chip system further includes a memory, which is configured to store desired computer programs and data for the terminal. The chip system may be composed of chips, or may include chips and other discrete devices.

In a sixteenth aspect, the present disclosure provides a computer program that, when run on a computer, causes the computer to perform the methods described above.

### BRIEF DESCRIPTION OF THE DRAWINGS

In order to more clearly illustrate the technical solutions in the embodiments of the present disclosure or the background, the drawings to be used in the embodiments of the present disclosure or the background will be described below.
FIG. 1 is a schematic diagram of the architecture of a communication system provided in an embodiment of the present disclosure.
FIG. 2 is a flowchart of an information sending method provided in an embodiment of the present disclosure.
FIG. 3 is a flowchart of an information sending method provided in an embodiment of the present disclosure.
FIG. 4 is a flowchart of an information sending method provided in an embodiment of the present disclosure.
FIG. 5 is a flowchart of another information sending method provided in an embodiment of the present disclosure.
FIG. 6 is a flowchart of another information sending method provided in an embodiment of the present disclosure.
FIG. 7 is a flowchart of yet another information sending method provided in an embodiment of the present disclosure.
FIG. 8 is a flowchart of yet another information acquiring method provided in an embodiment of the present disclosure.
FIG. 9 is a flowchart of yet another information acquiring method provided in an embodiment of the present disclosure.
FIG. 10 is a flowchart of still another information acquiring method provided in an embodiment of the present disclosure.
FIG. 11a is a schematic diagram of the interaction flow of a registration procedure provided in an embodiment of the present disclosure.
FIG. 11b is a schematic diagram of the interaction flow of a UE policy association establishment procedure provided in an embodiment of the present disclosure.
FIG. 11c is a schematic diagram of the interaction flow of a UE configuration update procedure provided in an embodiment of the present disclosure.
FIG. 11d is a schematic diagram of the interaction flow of a UE policy association modification procedure provided in an embodiment of the present disclosure.
FIG. 11e is a schematic diagram of the interaction flow of a service specific parameter provisioning procedure provided in an embodiment of the present disclosure.
FIG. 11f is a schematic diagram of the interaction flow of a terminal trigger configuration procedure provided in an embodiment of the present disclosure.
FIG. 12 is a schematic block diagram of a communication device provided in an embodiment of the present disclosure.
FIG. 13 is a schematic block diagram of another communication device provided in an embodiment of the present disclosure.
FIG. 14 is a schematic block diagram of a chip provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the embodiments of the present disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an," and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the terms "if" and "in a case where" may be construed to mean "when" or "upon" or "in response to determining" depending on the context.

To facilitate the understanding, the terminology used in the present disclosure will be introduced first.

### 1. Access and mobility management function (AMF) network element

The AMF network element is a logical node functional network element on the core network side. The AMF network element is the core network control plane access point for terminals and wireless networks. The AMF network element receives all connection and session related information from a UE, and performs registration, connection, reachability, and mobility management. In addition, the AMF network element provides a session management message transmission channel for the terminal and a session management function (SMF) device, and provides authentication and authorization functions for users when they access the network.
2. An application function (AF) network element is similar to an application server. The AF network element may interact with other core network control plane network functions (NFs) and provide services. The AF network element may exist for different application services and may be owned by operators or trusted third parties.
3. An network exposure function (NEF) network element, located between the core network and external third-party application function body (and possibly some internal AFs), is responsible for managing all external applications that expose network data to the outside. The NEF network element provides corresponding security guarantees to ensure the security of external applications to the 3rd Generation Partnership Project (3GPP) network, and provides functions such as opening up the quality of service (QoS) customization capabilities of external applications, subscription to mobility state events, and distribution of AF requests.
4. A user plane function (UPF) network element is responsible for functions, including routing and forwarding of user data packets, data interaction with external data networks, QoS processing of the user plane, implementation of flow control rules (such as gating, redirection, and traffic redirection), and the like.

### 5. Unified data management (UDM) network element

The UDM network element is responsible for the management of terminal identification, subscription data, authentication data, and the registration management of service network elements for terminals (for example, the AMF network element currently providing services to the terminal; if the terminal switches to a different AMF network element, the UDM network element will also send a deregistration message to the old AMF network element, requesting the old AMF network element to delete relevant information of the user).
6. A policy control function (PCF) network element supports a unified policy framework to manage network behaviors, provides policy rules for network entities for implementation, and accesses subscription information from a unified data repository.
7. A unified data repository (UDR) network element is used by UDM network elements to store or read subscription data, and used by PCF network elements to store or read policy data.
8. A radio access network (RAN) is used to control the access of users to mobile communication networks wirelessly.

To better understand the information sending method disclosed in the embodiments of the present disclosure, the communication system to which the embodiments of the present disclosure are applicable is first described below.

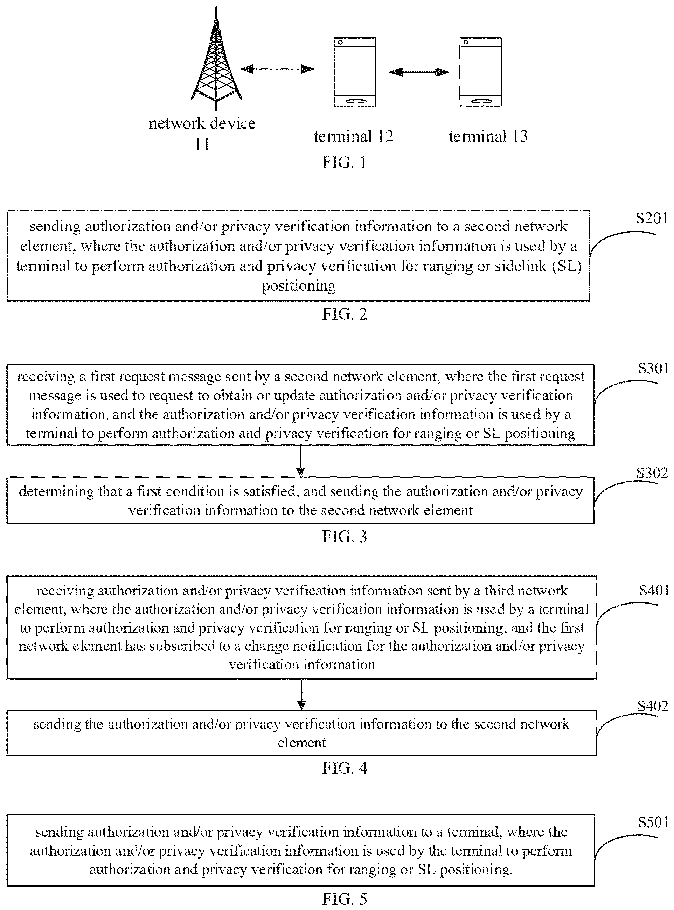

Reference is made to FIG. 1, which is a schematic diagram of the architecture of a communication system provided in an embodiment of the present disclosure. The communication system may include, but is not limited to, one network device and two terminals, and the two terminals are connected via an SL. Moreover, the number and form of devices shown in FIG. 1 are used as examples only, but do not constitute a limitation on the embodiments of the present disclosure. In practical applications, two or more network devices and two or more terminals may be included. Optionally, the communication system shown in FIG. 1 includes one network device 11 and two terminals 12, 13 as an example. The terminals 12, 13 are connected via an SL.

In the present disclosure, the terminal 12 may be a sending end, and the terminal 13 may be a peer terminal. One or more terminals 13 may be provided, which is not limited in the present disclosure. Alternatively, the terminal 13 may be a sending end, and the terminal 12 may be a peer terminal. One or more terminals 12 may be provided, which is not limited in the present disclosure.

It should be noted that the technical solution in this embodiment of the present disclosure may be applied to various communication systems, such as a long term evolution (LTE) system, a 5th generation (5G) mobile communication system, a 5G new radio (NR) system, or other new future mobile communication systems. It should also be noted that the sidelink in the embodiments of the present disclosure may also be referred to as a side link or a straight-through link.

The network device 11 in the embodiments of the present disclosure may be an entity on the network side for transmitting or receiving signals. The network device 11 may be a core network device or an access network device. The core network device is, for example, a location management function (LMF) network element, an access and mobility management function (AMF) network element, a policy control function (PCF) network element, or the like. The access network device may include, for example, evolved NodeBs (eNBs), transmission reception points (TRPs), next generation NodeBs (gNBs) in NR systems, base stations in other future mobile communication systems, or access nodes in wireless fidelity (Wi-Fi) systems, and the like. The specific technology and the specific device form adopted by the network device are not limited in the embodiments of the present disclosure.

The terminal in the embodiments of the present disclosure may be an entity on the user side for receiving or transmitting signals, such as a mobile phone. The terminal may also be called a terminal device, a user equipment (UE), a mobile station (MS), a mobile terminal (MT), or the like. The terminal may be a car with a communication function, a smart car, a vehicle networking device, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or the like. The specific technology and specific device form adopted by the terminal are not limited in the embodiments of the present disclosure.

The methods involved in the embodiments of the present disclosure may be applied to scenarios that require to support the terminal to perform authorization and privacy verification. The terminal may include, for example, all relevant UEs in ranging or SL positioning or relevant UEs in other services, which is not limited.

The terminal in the embodiments of the present disclosure may be, for example, a positioning terminal, an SL reference terminal, an SL positioning server UE, a target UE for ranging based services and SL positioning, or a terminal used for any other service within a telecommunications system. The terminal may be, for example, a mobile phone, or a tablet, smart watch, smart car, vehicle networking device, or the like with mobile communication functions, which is not limited.

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new business scenarios, the technical solution provided in this embodiment of the present disclosure is also applicable to similar technical problems.

It should be noted that all actions in the present disclosure involved in the acquisition of authorization information, privacy verification information, signals, information, or data are carried out in compliance with the relevant data protection laws and policies of the country where the application is located, and with authorization from the owner of the relevant device.

In the embodiments of the present disclosure, the authorization and/or privacy verification information may include new authorization and/or privacy verification information (e.g., generated by the network or application), or updated authorization and/or privacy verification information (e.g., updated by the network or application), which is not limited.

The information sending method provided in the embodiments of the present disclosure supports configuring authorization and/or privacy verification information into the terminal. For example, the authorization and/or privacy verification information may be organized into a privacy/authorization configuration file, or the authorization and/or privacy verification information may be organized as independent authorization and/or privacy verification information, or as part of terminal policy information (e.g., UE policy information), which is not limited.

The information sending method provided in the embodiments of the present disclosure may allow authorization and/or privacy verification information to be configured and stored in the network (e.g., stored in a UDR network element), or it may be configured by an application, which is not limited.

The information sending method provided in the embodiments of the present disclosure may provide authorization and/or privacy verification information to the terminal in one or more procedures of the registration procedure, the terminal policy association establishment procedure, the terminal configuration update procedure, the terminal policy association modification procedure, and the service specific parameter provisioning procedure, which is not limited.

The information sending method and apparatus provided in the embodiments of the present disclosure will be described below in detail with reference to the accompanying drawings. FIG. 2 is a flowchart of an information sending method provided in an embodiment of the present disclosure, which is performed by a first network element. The information sending method in this embodiment may be applied to the first network element, which may be, for example, a PCF network element. Certainly, the first network element may also be any other possible network element, which is not limited.

In this embodiment, a second network element may be, for example, an AMF network element. Certainly, the second network element may also be any other possible network element, which is not limited.

As shown in FIG. 2, this method may include, but is not limited to, the following step.

In step S201, authorization and/or privacy verification information is sent to a second network element, where the authorization and/or privacy verification information is used by a terminal to perform authorization and privacy verification for ranging or SL positioning.

In some embodiments, the authorization and/or privacy verification information refers to information that supports the terminal to perform authorization and/or privacy verification. For example, the terminal may determine, based on the authorization and/or privacy verification information, whether to allow ranging or SL positioning requests from a peer terminal, whether to share its location information with a peer terminal, or the like, to assist in ranging or SL positioning, which is not limited.

In some embodiments, the authorization and/or privacy verification information is, for example, Authorization or Privacy Verification Information, which is not limited.

In some embodiments, the authorization and/or privacy verification information may include authorization information, privacy verification information, or both authorization information and privacy verification information, which is not limited.

In some embodiments, the first network element may provide authorization and/or privacy verification information, which is not limited.

In some embodiments, the PCF network element may provide or update authorization and/or privacy verification information, which is not limited.

In some embodiments, the PCF network element may send authorization and/or privacy verification information to the AMF network element in order to send the authorization and/or privacy verification information to the terminal via the AMF, which is not limited.

In some embodiments, the PCF network element may initiate a UE configuration update procedure that transmits transparent UE policies to trigger the sending of the authorization and/or privacy verification information to the AMF network element, and send the authorization and/or privacy verification information to the terminal via the AMF, which is not limited.

In this embodiment, the first network element may send authorization and/or privacy verification information to the second network element, so as to send the authorization and/or privacy verification information to the terminal via the second network element. The authorization and/or privacy verification information is used by the terminal to perform authorization and privacy verification for ranging or SL positioning. Therefore, the terminal may effectively obtain information that supports the terminal to perform authorization and/or privacy verification.

FIG. 3 is a flowchart of an information sending method provided in an embodiment of the present disclosure, which is performed by a first network element. The information sending method in this embodiment may be applied to the first network element, which may be, for example, a PCF network element. Certainly, the first network element may also be any other possible network element, which is not limited.

As shown in FIG. 3, this method may include, but is not limited to, the following steps.

In step S301, a first request message sent by a second network element is received, where the first request message is used to request to obtain or update authorization and/or privacy verification information, and the authorization and/or privacy verification information is used by a terminal to perform authorization and privacy verification for ranging or SL positioning.

In some embodiments, a request message used to request to obtain or update authorization and/or privacy verification information may be referred to as the first request message, which is not limited.

In some embodiments, when an AMF network element receives a terminal request to obtain authorization and/or privacy verification information, the AMF network element may request the PCF network element to obtain the authorization and/or privacy verification information; or when an AMF network element receives a terminal request to update authorization and/or privacy verification information, the AMF network element may request the PCF network element to update the authorization and/or privacy verification information, which is not limited.

In some embodiments, the AMF network element may send the first request message to the PCF network element to request to obtain or update the authorization and/or privacy verification information, which is not limited.

In step S302, it is determined that a first condition is satisfied, and the authorization and/or privacy verification information is sent to the second network element.

In some embodiments, the first condition may be, for example, a triggering condition, or a threshold condition that triggers the first network element to send the authorization and/or privacy verification information to the second network element. For example, when the first network element determines that the first condition is satisfied, the sending of the authorization and/or privacy verification information to the second network element may be triggered, which is not limited.

In some embodiments, the first condition may be a preset condition, e.g., set based on a system protocol; or the first condition may be any other possible form of condition, which is not limited.

In the information sending method provided in the embodiments of the present disclosure, determining that the first condition is satisfied may be one or more of: determining to request to obtain the authorization and/or privacy verification information based on local information; determining to update the authorization and/or privacy verification information based on local information; determining that the terminal requests to obtain the authorization and/or privacy verification information; determining that the terminal requests to update the authorization and/or privacy verification information; or determining to update the authorization and/or privacy verification information of the terminal based on a notification from a third network element. This enables timely triggering of the provision of the authorization and/or privacy verification information to the terminal via the second network element.

In some embodiments, the third network element may be, for example, a UDR network element, which is not limited.

In some embodiments, the PCF network element may receive the first request message sent by the AMF network element, and if it is determined that the first condition is satisfied, the PCF network element may send the authorization and/or privacy verification information to the AMF network element, which is not limited.

In some embodiments, the PCF network element may initiate a UE configuration update procedure that transmits transparent UE policies to trigger the sending of authorization and/or privacy verification information to the AMF network element, and send the authorization and/or privacy verification information to the terminal via the AMF, which is not limited.

In this embodiment, the first network element may receive the first request message sent by the second network element. The first request message is used to request to obtain or update authorization and/or privacy verification information. If the first condition is satisfied, the first network element sends the authorization and/or privacy verification information to the second network element. Thus, it is possible to realize the on-demand sending of the authorization and/or privacy verification information based on the request from the second network element and the triggering of sending the authorization and/or privacy verification information to the second network element when the first condition is satisfied.

In the information sending method provided in the embodiments of the present disclosure, the first request message may include first information and/or a terminal policy request parameter, where the first information is used to request to obtain or update the authorization and/or privacy verification information, or the terminal policy request parameter may include the first information, which is not limited.

In some embodiments, the information included in the first request message for requesting to obtain or update the authorization and/or privacy verification information may be referred to as first information. The first information may be included in the terminal policy request parameter, or the first information may be an independent parameter, which is not limited.

In some embodiments, the terminal policy request parameter may be, for example, the UE policy request (e.g., requested UE policies, or a payload container type set to a "UE policy container" and a UE STATE INDICATION message), which is not limited.

In the information sending method provided in the embodiments of the present disclosure, the first information may include at least one of a UE policy association establishment request message, a UE policy association update request message, or an N1 interface message notification message, which is not limited.

In some embodiments, the UE policy association establishment request message is, for example, Npcf_UEPolicyControl Create Request; the UE policy association update request message is, for example, Npcf_UEPolicyControl_Update Request; and the N1 interface message notification message is, for example, Namf_Communication_N1MessageNotify, which are not limited.

In the information sending method provided in the embodiments of the present disclosure, the PCF network element may also directly obtain the authorization and/or privacy verification information from the UDR network element. For example, the PCF network element may retrieve new or updated authorization and/or privacy verification information from the UDR network element, which is not limited.

FIG. 4 is a flowchart of an information sending method provided in an embodiment of the present disclosure, which is performed by a first network element. The information sending method in this embodiment may be applied to the first network element, which may be, for example, a PCF network element. Certainly, the first network element may also be any other possible network element, which is not limited.

As shown in FIG. 4, this method may include, but is not limited to, the following steps.

In step S401, authorization and/or privacy verification information sent by a third network element is received, where the authorization and/or privacy verification information is used by a terminal to perform authorization and privacy verification for ranging or SL positioning, and the first network element has subscribed to a change notification for the authorization and/or privacy verification information.

In some embodiments, the third network element may be, for example, a UDR network element. Certainly, the third network element may also be any other possible network element, which is not limited.

In some embodiments, the UDR network element may send authorization and/or privacy verification information to the PCF network element to trigger the PCF network element to provide the authorization and/or privacy verification information to the terminal via the AMF network element, which is not limited.

In the information sending method provided in the embodiments of the present disclosure, the change notification for the authorization and/or privacy verification information is triggered by at least one of: a user data update locally configured by a network, or a user data update triggered by a fifth network element, thereby timely providing the authorization and/or privacy verification information to the first network element.

In some embodiments, the fifth network element may be, for example, an AF network element, or any other possible network element, which is not limited.

In some embodiments, the PCF network element may subscribe to the change notification for the authorization and/or privacy verification information. If the PCF network element has subscribed to the change notification for the authorization and/or privacy verification information, the UDR network element may notify the PCF network element of the new authorization and/or privacy verification information when the authorization and/or privacy verification information changes, which is not limited.

In step S402, the authorization and/or privacy verification information is sent to the second network element.

In this embodiment, the first network element may subscribe to the change notification for the authorization and/or privacy verification information. If the fifth network element triggers the generation or update of the authorization and/or privacy verification information, the first network element may receive the authorization and/or privacy verification information sent by the third network element and trigger the sending of the authorization and/or privacy verification information to the second network element, thereby enabling timely sending of the authorization and/or privacy verification information to the second network element.

In the information sending method provided in the embodiments of the present disclosure, the first network element may also send a second request message to the third network element, where the second request message is used to request to obtain or update the authorization and/or privacy verification information from the third network element; and receives the authorization and/or privacy verification information sent by the third network element in response to the second request message. This effectively improves the flexibility of obtaining the authorization and/or privacy verification information, which is effectively applicable to personalized communication scenarios.

In some embodiments, the first network element being the PCF network element and the third network element being the UDR network element are taken as an example. The PCF network element may also send a second request message to the UDR network element, where the second request message is used to request to obtain or update the authorization and/or privacy verification information from the UDR network element; and receive the authorization and/or privacy verification information sent by the UDR network element in response to the second request message, which is not limited.

The request message used to request to obtain or update the authorization and/or privacy verification information from the UDR network element may be referred to as the second request message.

In some embodiments, the UDR network element may also send the authorization and/or privacy verification information to the PCF network element based on a request from the PCF network element. For example, if the PCF network element has not subscribed to the change notification for the authorization and/or privacy verification information, the PCF network element may send a second request message to the UDR network element to request to obtain or update the authorization and/or privacy verification information when the PCF network element has a need to obtain or update the authorization and/or privacy verification information, which is not limited.

It should be noted that in the following embodiments, regarding the descriptions of the same or corresponding method steps and terms as in the above embodiments, reference may be made to the above embodiments, which will not be repeated here.

FIG. 5 is a flowchart of another information sending method provided in an embodiment of the present disclosure, which is performed by a second network element. The information sending method in this embodiment may be applied to the second network element, which may be, for example, an AMF network element, or any other possible network element, which is not limited.

As shown in FIG. 5, this method may include, but is not limited to, the following step.

In step S501, authorization and/or privacy verification information is sent to a terminal, where the authorization and/or privacy verification information is used by the terminal to perform authorization and privacy verification for ranging or SL positioning.

In this embodiment, the second network element may provide authorization and/or privacy verification information to the terminal to support the terminal to perform authorization and/or privacy verification. For example, the second network element may provide the authorization and/or privacy verification information to the terminal based on a request from the terminal, or the second network element may determine to provide the authorization and/or privacy verification information to the terminal based on local policies, which is not limited.

In some embodiments, the AMF network element may provide the authorization and/or privacy verification information to the terminal to support the terminal to perform authorization and/or privacy verification, which is not limited.

In this embodiment, the second network element sends the authorization and/or privacy verification information to the terminal, where the authorization and/or privacy verification information is used by the terminal to perform authorization and privacy verification for ranging or SL positioning, so that the terminal may effectively obtain information that supports the terminal to perform authorization and/or privacy verification.

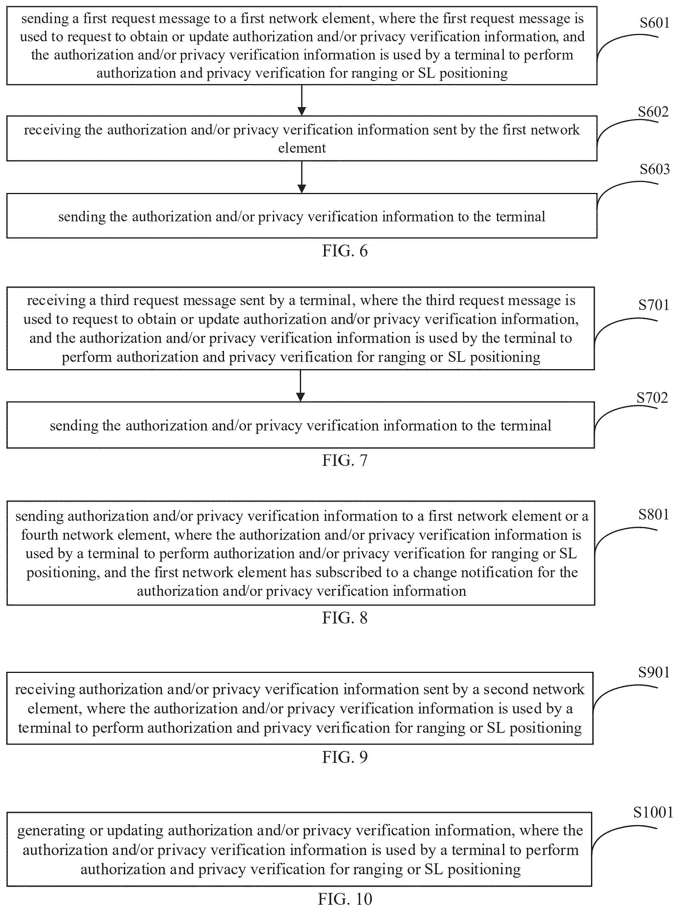

FIG. 6 is a flowchart of another information sending method provided in an embodiment of the present disclosure, which is performed by a second network element. The information sending method in this embodiment may be applied to the second network element, which may be, for example, an AMF network element, or any other possible network element, which is not limited.

As shown in FIG. 6, this method may include, but is not limited to, the following steps.

In step S601, a first request message is sent to a first network element, where the first request message is used to request to obtain or update authorization and/or privacy verification information, and the authorization and/or privacy verification information is used by a terminal to perform authorization and privacy verification for ranging or SL positioning.

In step S602, the authorization and/or privacy verification information sent by the first network element is received.

In step S603, the authorization and/or privacy verification information is sent to the terminal.

In some embodiments, the PCF network element may determine to initiate an information provision procedure based on the first request message sent by the AMF network element. The information provision procedure may include authorization and/or privacy verification information. For example, the PCF network element may provide the authorization and/or privacy verification information to the AMF network element by initiating the information provision procedure. The AMF network element may receive the authorization and/or privacy verification information sent by the PCF network element and send the authorization and/or privacy verification information to the terminal, which is not limited.

In the information sending method provided in the embodiments of the present disclosure, the second network element may further receive the authorization and/or privacy verification information sent by a fourth network element, where the second network element has subscribed to a change notification for the authorization and/or privacy verification information.

In some embodiments, the fourth network element may be, for example, a UDM network element. Certainly, the fourth network element may also be any other possible network element, which is not limited.

In some embodiments, the UDM network element may send authorization and/or privacy verification information to the AMF network element to trigger the AMF network element to provide the authorization and/or privacy verification information to the terminal, which is not limited.

In the information sending method provided in the embodiments of the present disclosure, the change notification for the authorization and/or privacy verification information is triggered by at least one of: a user data update locally configured by a network, or a user data update triggered by a fifth network element, thereby timely providing the authorization and/or privacy verification information to the first network element.

In some embodiments, the fifth network element may be, for example, an AF network element, or any other possible network element, which is not limited.

In some embodiments, the AMF network element (an optional example of the second network element) may also receive the authorization and/or privacy verification information sent by the UDM network element (an optional example of the fourth network element), where the AMF network element has subscribed to the change notification for the authorization and/or privacy verification information, which is not limited.

In some embodiments, when the AMF network element interacts with the UDM network element or a UDR network element, the PCF network element may exist or may not exist, which is not limited.

In some embodiments, if the PCF network element exists, the AMF network element may directly interact with the UDM network element to obtain authorization and/or privacy verification information provided by the UDM network element (the authorization and/or privacy verification information provided by the UDM network element may be obtained by the UDM network element from the UDR or received from the UDR push). Alternatively, the AMF network element may also interact with the UDR network element via the PCF network element to obtain the authorization and/or privacy verification information provided by the UDR network element. Alternatively, the AMF network element may also retrieve the authorization and/or privacy verification information from the UDR network element. There are no restrictions on this.

In some embodiments, if no PCF network element exists, the AMF network element may directly interact with the UDM network element to obtain authorization and/or privacy verification information provided by the UDM network element. Alternatively, the AMF network element may also retrieve authorization and/or privacy verification information from the UDR network element. There are no restrictions on this.

In the information sending method provided in the embodiments of the present disclosure, the second network element may send a second request message to a fourth network element, where the second request message is used to request to obtain or update the authorization and/or privacy verification information from the fourth network element, and the authorization and/or privacy verification information is obtained by the fourth network element from a third network element, or pushed to the fourth network element by a third network element; and the second network element may receive the authorization and/or privacy verification information sent by the fourth network element in response to the second request message. This supports the second network element to perform on-demand acquisition of the authorization and/or privacy verification information, effectively improving the flexibility of obtaining the authorization and/or privacy verification information, enabling on-demand acquisition, and being effectively applicable to personalized communication scenarios.

In some embodiments, the AMF network element may also send a second request message to the UDM network element, where the second request message is used to request to obtain or update authorization and/or privacy verification information from the UDM network element; and the AMF network element may receive the authorization and/or privacy verification information sent by the UDM network element in response to the second request message.

In some embodiments, the authorization and/or privacy verification information may be obtained by the UDM network element from the UDR network element, or may be pushed by the UDR network element to the UDM network element, which is not limited.

FIG. 7 is a flowchart of another information sending method provided in an embodiment of the present disclosure, which is performed by a second network element. The information sending method in this embodiment may be applied to the second network element, which may be, for example, an AMF network element, or any other possible network element, which is not limited.

As shown in FIG. 7, this method may include, but is not limited to, the following steps.

In step S701, a third request message sent by a terminal is received, where the third request message is used to request to obtain or update authorization and/or privacy verification information, and the authorization and/or privacy verification information is used by the terminal to perform authorization and privacy verification for ranging or SL positioning.

In this embodiment, the AMF network element may provide authorization and/or privacy verification information to the terminal based on a request from the terminal.

The request message sent by the terminal for requesting to obtain or update the authorization and/or privacy verification information may be referred to as the third request message.

In some embodiments, the third request message includes second information, where the second information is used to request to obtain or update the authorization and/or privacy verification information; and/or a terminal policy request parameter, where the terminal policy request parameter includes the second information, which is not limited.

In some embodiments, the information included in the third request message for requesting to obtain or update the authorization and/or privacy verification information may be referred to as the second information. The second information may be included in the terminal policy request parameter, or the second information may be an independent parameter, which is not limited.

In the information sending method provided in the embodiments of the present disclosure, the third request message may be either a registration request message or a terminal policy provisioning request message, which is not limited.

In some embodiments, the registration request message may be, for example, a Registration Request, and the terminal policy provisioning request message may be, for example, a UE Policy provisioning request, which is not limited.

In some embodiments, the AMF network element may receive a registration request message sent by the terminal, where the registration request message is used to request to obtain the authorization and/or privacy verification information.

In some embodiments, it is possible to support providing the authorization and/or privacy verification information to the terminal during the registration procedure, which is not limited.

For example, during the registration procedure of initial registration, mobile registration update, or periodic registration update, the terminal may be provided with information required for privacy/authorization check or information required for updating privacy/authorization check (an optional example of the authorization and/or privacy verification information), which is not limited.

In some embodiments, the authorization and/or privacy verification information may be provided to the terminal in a timely manner during the registration procedure initiated by the terminal to the network, which is not limited.

In some embodiments, the AMF network element may receive a registration request message sent by the terminal. The registration request message may be, for example, a Registration Request. This registration request message may be used to request the authorization and/or privacy verification information. For example, an indication for requesting the authorization and/or privacy verification information may be included in the registration request message. The indication for requesting the authorization and/or privacy verification information may be expressed as privacy auth info required, which is not limited.

In step S702, the authorization and/or privacy verification information is sent to the terminal.

In some embodiments, the second network element may transparently transmit the authorization and/or privacy verification information to the terminal via at least one of the following messages between the terminal and the second network element: a UE configuration update procedure based on a transparent UE policy delivery; a UE configuration update procedure; or a registration response message, which is not limited.

In some embodiments, the AMF network element may transparently transmit the authorization and/or privacy verification information to the terminal, which is not limited.

In some embodiments, after the AMF provides the authorization and/or privacy verification information to the terminal, the AMF may also update the authorization and/or privacy verification information. If it is determined that updated authorization and/or privacy verification information has been obtained, the AMF may also provide the updated authorization and/or privacy verification information to the terminal, which is not limited.

In this embodiment, the second network element may receive a third request message sent by a terminal, where the third request message is used to request to obtain or update authorization and/or privacy verification information, and the authorization and/or privacy verification information is used by the terminal to perform authorization and privacy verification for ranging or SL positioning; and the second network element may send the authorization and/or privacy verification information to the terminal, so that the terminal may obtain the information that supports the terminal to perform authorization and/or privacy verification in a timely and effective manner.

FIG. 8 is a flowchart of yet another information acquiring method provided in an embodiment of the present disclosure, which is performed by a third network element. The information sending method in this embodiment may be applied to a third network element, which may be, for example, a UDR network element, or any other possible network element, which is not limited.

As shown in FIG. 8, this method may include, but is not limited to, the following step.

In step S801, authorization and/or privacy verification information is sent to a first network element or a fourth network element, where the authorization and/or privacy verification information is used by a terminal to perform authorization and/or privacy verification for ranging or SL positioning, and the first network element has subscribed to a change notification for the authorization and/or privacy verification information.

In this embodiment, the third network element may provide or retrieve authorization and/or privacy verification information, which is not limited.

In some embodiments, the UDR network element may provide or retrieve authorization and/or privacy verification information, which is not limited.

In the information sending method provided in the embodiments of the present disclosure, the UDR network element may further send authorization and/or privacy verification information to a PCF network element or an AMF network element via a UDM, where the PCF network element or the AMF network element has subscribed to the change notification for the authorization and/or privacy verification information.

In the information sending method provided in the embodiments of the present disclosure, the UDR network element may further receive a second request message sent by the first network element or sent by a second network element via the fourth network element, where the second request message is used to request to obtain or update the authorization and/or privacy verification information from the third network element; and send the authorization and/or privacy verification information to the first network element or to the second network element via the fourth network element in response to the second request message.

In some embodiments, the UDR network element may receive a second request message sent by the PCF network element, or receive a second request message sent by the AMF network element via the UDM network element, so as to request to obtain or update the authorization and/or privacy verification information, which is not limited.

FIG. 9 is a flowchart of yet another information acquiring method provided in an embodiment of the present disclosure, which is performed by a terminal. The information acquiring method in this embodiment may be applied to a terminal, which is not limited.

As shown in FIG. 9, this method may include, but is not limited to, the following step.

In step S901, authorization and/or privacy verification information sent by a second network element is received, where the authorization and/or privacy verification information is used by a terminal to perform authorization and privacy verification for ranging or SL positioning.

In some embodiments, the terminal may receive authorization and/or privacy verification information sent by an AMF network element to perform authorization and privacy verification, which is not limited.

In this embodiment, the terminal may receive authorization and/or privacy verification information sent by the second network element, and the authorization and/or privacy verification information is used by the terminal to perform authorization and privacy verification for ranging or SL positioning, so as to effectively obtain the authorization and/or privacy verification information.

In the information sending method provided in the embodiments of the present disclosure, the terminal may send a third request message to the second network element to request to obtain or update authorization and/or privacy verification information based on the third request message, thereby enabling on-demand acquisition of the authorization and/or privacy verification information and improving the flexibility of acquiring the authorization and/or privacy verification information.

In the information sending method provided in the embodiments of the present disclosure, the terminal may receive the authorization and/or privacy verification information transmitted transparently by an AMF network element.

In the information sending method provided in the embodiments of the present disclosure, the terminal may request to obtain authorization and/or privacy verification information provided by a network, or the terminal may trigger an update of authorization and/or privacy verification information provided by a network. If the terminal requests to obtain the authorization and/or privacy verification information provided by the network, the indication for requesting the authorization and/or privacy verification information may be included in the third request message to request the network to provide the authorization and/or privacy verification information based on the third request message. If the terminal requests the update of the authorization and/or privacy verification information, the indication for requesting the update of the authorization and/or privacy verification information may be included in the third request message to request the network to provide updated authorization and/or privacy verification information based on the third request message. There are no restrictions on this.

FIG. 10 is a flowchart of still another information acquiring method provided in an embodiment of the present disclosure, which is performed by a fifth network element. The information sending method in this embodiment may be applied to the fifth network element, which may be, for example, an AF network element, or any other possible network element, which is not limited.

As shown in FIG. 10, this method may include, but is not limited to, the following step.

In step S1001, authorization and/or privacy verification information is generated or updated, where the authorization and/or privacy verification information is used by a terminal to perform authorization and privacy verification for ranging or SL positioning.

In this embodiment, the fifth network element may generate or update authorization and/or privacy verification information to trigger the first network element to provide the authorization and/or privacy verification information to the terminal via the second network element, enabling the terminal to obtain the authorization and/or privacy verification information in a timely manner.

In this embodiment, the fifth network element stores the authorization and/or privacy verification information in a third network element, and sends a change notification for the authorization and/or privacy verification information to trigger the third network element to send the authorization and/or privacy verification information to a first network element or to trigger a fourth network element to send the authorization and/or privacy verification information to a second network element, where the change notification for the authorization and/or privacy verification information has been subscribed to by the first network element or the second network element.

In the information sending method provided in the embodiments of the present disclosure, the AF network element may trigger the storage of the authorization and/or privacy verification information in a UDR network element, and also may trigger the sending of the change notification for the authorization and/or privacy verification information, thereby triggering the UDR network element to send the authorization and/or privacy verification information to the PCF network element or triggering the UDM network element to send the authorization and/or privacy verification information to the AMF network element. The change notification for the authorization and/or privacy verification information has been subscribed to by the PCF network element or the AMF network element.

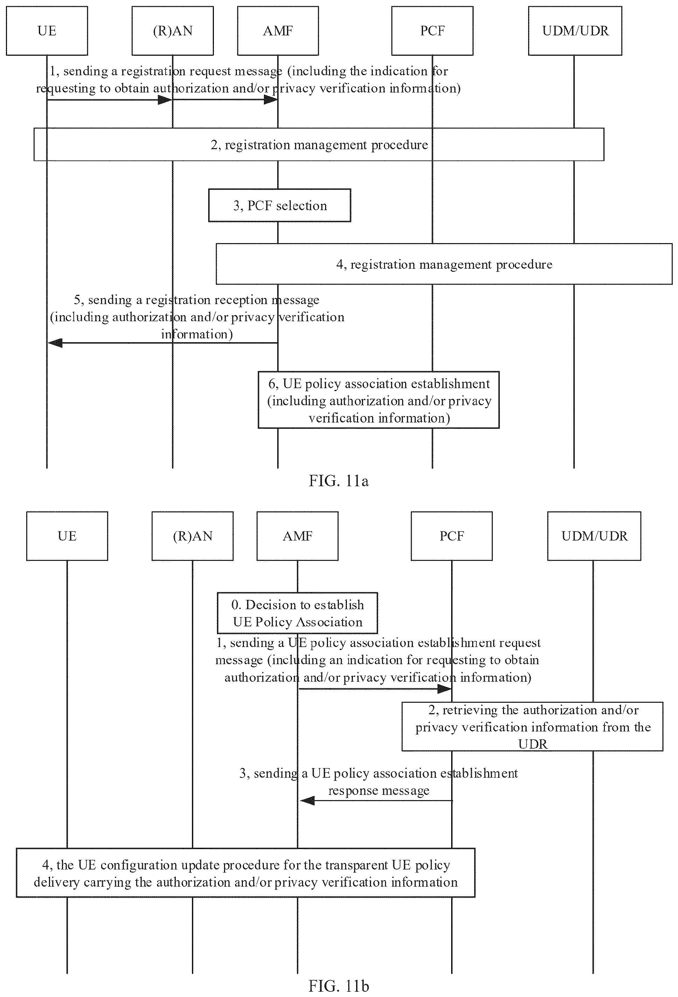

FIG. 11a is a schematic diagram of the interaction flow of a registration procedure provided in an embodiment of the present disclosure. Taking a UE as the terminal as an example, the interaction diagram of the UE, an R(AN), an AMF, a PCF, and a UDM/UDR is shown, which is not limited. In this embodiment, authorization and/or privacy verification information may be delivered during the registration procedure. For example, during the registration procedure of the initial registration, mobile registration update, or periodic registration update procedure, the UE may be provisioned with the required information for privacy/authorization check or the required information for the update of privacy/authorization check (an optional example of authorization and/or privacy verification information), which is not limited.

In step 1, a registration request message (including the indication for requesting to obtain authorization and/or privacy verification information) is sent.

In some embodiments, the registration request message may be, for example, a Registration Request (including privacy auth info required), privacy auth info required may indicate a request to obtain privacy auth info, and privacy auth info is an optional example of authorization and/or privacy verification information, which is not limited.

In step 2, registration management procedure.

In some embodiments, the registration management procedure may be, for example, a Registration Management procedure, which is not limited.

In step 3, PCF selection.

In some embodiments, the AMF may trigger the selection of a PCF, such as PCF selection, in which the PCF supporting the related capability for provisioning authorization and/or privacy verification information is selected, which is not limited.

In step 4, registration management procedure.

In step 5, the AMF may send a registration reception message (including authorization and/or privacy verification information) to the UE.

In some embodiments, the registration reception message may be, for example, Registration Accept, and Registration Accept may include privacy auth info, which is not limited.

In step 6, UE policy association establishment (including authorization and/or privacy verification information).

In some embodiments, the UE policy association establishment may be, for example, UE Policy Association Establishment. During the UE policy association establishment procedure, privacy auth info may be sent. For example, during the UE policy association establishment procedure, privacy auth info may be transparently transmitted to the UE based on the interaction between the PCF and the AMF, which is not limited.

In this embodiment, steps 5 and 6 may be executed separately, which is not limited.

Examples are given below.

In step 1, the indication for requiring the authorization and/or privacy verification information may be included in the registration request message, which is not limited.

The indication for requiring the authorization and/or privacy verification information may be a payload container type set to a "UE policy container" and a UE STATE INDICATION message, or may be a standalone indication, which is not limited.

In some embodiments, in step 3, the PCF supporting the related capability for provisioning the related information is selected, which is not limited.

In some embodiments, in step 6, the AMF performs a UE Policy Association Establishment with the PCF, which includes the required information for privacy/authorization check (an optional example of the authorization and/or privacy verification information), which is not limited.

In some embodiments, the AMF sends an Npcf_UEPolicyControl Create Request to the PCF to trigger the PCF to initiate a UE configuration update procedure based on a transparent UE policy delivery to transmit information to the UE, which is not limited.

In some embodiments, the UE configuration update procedure for the transparent UE policy delivery may be, for example, a UE Configuration Update procedure for transparent UE Policy delivery, which is not limited.

FIG. 11b is a schematic diagram of the interaction flow of a UE policy association establishment procedure provided in an embodiment of the present disclosure. Taking a UE as the terminal as an example, the interaction diagram of the UE, an R(AN), an AMF, a PCF, and a UDM/UDR is shown, which is not limited. In this embodiment, authorization and/or privacy verification information may be provided based on the UE policy association establishment procedure to support provisioning the authorization and/or privacy verification information.

In step 0, the AMF decides to establish a UE policy association.

In some embodiments, the decision to establish the UE policy association is, for example, the Decision to establish UE Policy Association, which is not limited.

In step 1, the AMF sends a UE policy association establishment request message (including an indication for requesting to obtain authorization and/or privacy verification information) to the PCF.

In some embodiments, the UE policy association establishment request message is, for example, Npcf_UEPolicyControl_Create Request, and Npcf_UEPolicyControl_Create Request may include privacy auth info required, which is not limited.

In step 2, the PCF may retrieve the authorization and/or privacy verification information from the UDR.

In step 3, the PCF sends a UE policy association establishment response message to the AMF.

In some embodiments, the UE policy association response message may be, for example, Npcf_UEPolicyControl Create Response, which is not limited.

In step 4, the UE configuration update procedure for the transparent UE policy delivery carries the authorization and/or privacy verification information.

In some embodiments, the PCF may initiate a UE configuration update procedure based on a transparent UE policy delivery to transmit information to the UE, which is not limited.

In some embodiments, the AMF decides to establish UE Policy Association for privacy auth info with the PCF when an indication for requiring privacy auth info is received from the UE or based on the local policy, e.g., the AMF may provide the privacy auth info to users authorized to use Ranging/SL Positioning service based on subscription data, which is not limited.

In some embodiments, the AMF may send an Npcf_UEPolicyControl create request, which may include an indication for requesting privacy auth info, which is not limited.

In some embodiments, the PCF may retrieve privacy auth info in the UDR using the Nudr_DM_Create message, and the Nudr_DM_Create message includes DataSet "Policy Data" and Data Subset "UE context policy control data", which is not limited.

In some embodiments, the PCF may initiate a UE configuration update procedure based on a transparent UE policy delivery to send privacy auth info to the terminal, which is not limited.

In some embodiments, the PCF may also use N1 and N2 interface message subscription messages (e.g., Namf_Communication _N1N2MessagesSubscribe) to send privacy auth info to the UE, and the PCF may also receive notifications from the UE that the privacy auth info has been received, which is not limited.

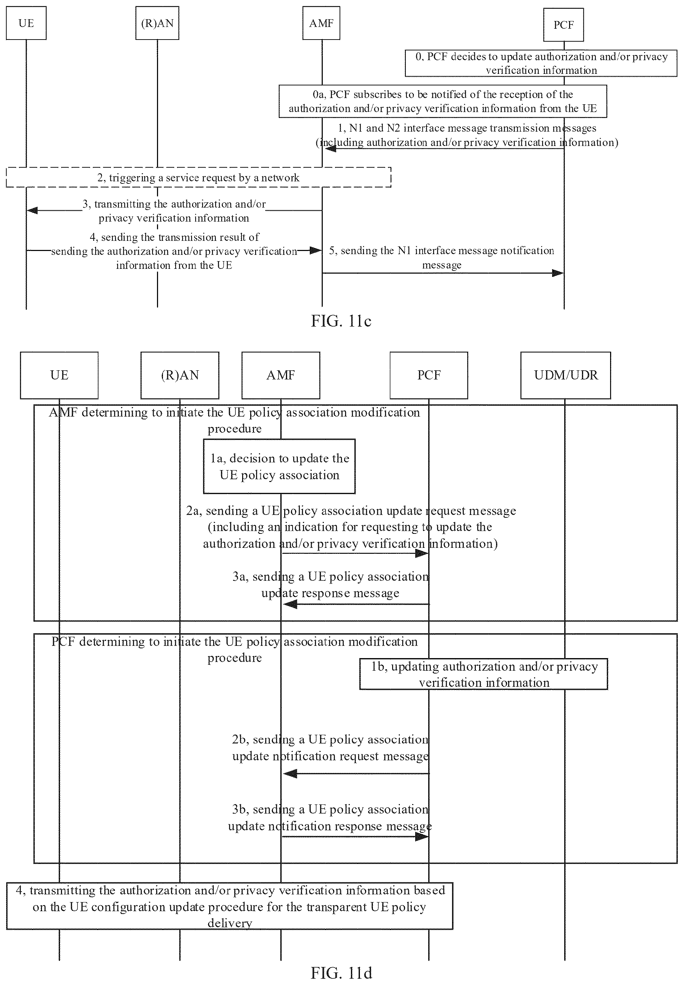

FIG. 11c is a schematic diagram of the interaction flow of a UE configuration update procedure provided in an embodiment of the present disclosure. Taking a UE as the terminal as an example, the interaction diagram of the UE, an R(AN), an AMF, and a PCF is shown, which is not limited. In this embodiment, authorization and/or privacy verification information may be transmitted based on the UE configuration update procedure for the transparent UE policy delivery, which is not limited.

In step 0, the PCF decides to update the authorization and/or privacy verification information.

In some embodiments, the PCF deciding to update the authorization and/or privacy authentication information is, for example, the PCF deciding to update UE privacy auth info, which is not limited.

In step 0a, the PCF subscribes to be notified of the reception of the authorization and/or privacy verification information from the UE.

In some embodiments, the PCF subscribing to be notified of the reception of the authorization and/or privacy verification information from the UE may be, for example, the PCF subscribing to be notified of the reception of the UE privacy auth info, which is not limited.

In step 1, the PCF sends N1 and N2 interface message transmission messages (including authorization and/or privacy verification information) to the AMF.

In some embodiments, the N1 and N2 interface message transmission messages may be, for example, Namf_Communication_N1N2MessageTransfer, and Namf_Communication_N1N2MessageTransfer may include privacy auth info, which is not limited.

In step 2, triggering a service request by a network.

In some embodiments, triggering the service request by the network is, for example, a Network Triggered Service Request, which is not limited.

In step 3, the AMF transmits the authorization and/or privacy verification information to the UE.

In step 4, the transmission result of sending the authorization and/or privacy verification information from the UE is sent.

In some embodiments, the transmission result of sending the authorization and/or privacy verification information from the UE may be, for example, the Result of the delivery of UE privacy auth info, which is not limited.

In step 5, the N1 interface message notification message is sent.

In some embodiments, the N1 interface message notification message is, for example, Namf_Communication_N1MessageNotify, which is not limited.

Examples are given below.

In some embodiments, in step 0, the PCF decides to update the information for privacy/authorization check (which may be an optional example of the authorization and/or privacy verification information) for the UE, which is not limited.

In some embodiments, in step 1, the PCF invokes Namf_Communication _N1N2MessageTransfer service operation provided by the AMF to transmit information for privacy/authorization check for the UE, which is not limited.

In some embodiments, in step 3, information for privacy/authorization check is delivered to the UE, which is not limited.

FIG. 11d is a schematic diagram of the interaction flow of a UE policy association modification procedure provided in an embodiment of the present disclosure. Taking a UE as the terminal as an example, the interaction diagram of the UE, an R(AN), an AMF, a PCF, and a UDM/UDR is shown, which is not limited. In this embodiment, authorization and/or privacy verification information may be provided based on the UE policy association modification procedure, which is not limited.

If the AMF determines to initiate the UE policy association modification procedure (UE Policy Association Modification initiated by the AMF), it may include the following steps.

In step 1a, the AMF decides to update a UE policy association.

In some embodiments, the decision to update the UE policy association is, for example, Decision to update UE Policy Association, which is not limited.

In step 2a, the AMF sends a UE policy association update request message (including an indication for requesting to update the authorization and/or privacy verification information) to the PCF.

In some embodiments, the UE policy association update request message may be, for example, an Npcf_UEPolicyControl_Update Request, and the Npcf_UEPolicyControl_Update Request may include privacy auth info required, which is not limited.

In step 3a, a UE policy association update response message is sent.

In some embodiments, the UE policy association update response message is, for example, an Npcf_UEPolicyControl_Update Response, which is not limited.

In some embodiments, the policy control request trigger conditions for provisioning privacy authentication information met in the AMF are as follows.

In step 1a, the AMF decides to initiate a UE policy association modification procedure to provide authorization and/or privacy verification information. For example, the UE may request to update (to request or to invalidate or to update the content) the authorization and/or privacy verification information after the UE Policy Association Establishment due to the capability change or related trigger condition change of the UE, or the AMF decides to update the authorization and/or privacy verification information based on the local policy change, which is not limited.

In step 2a, the indication for updating (requiring/updating/deleting) the authorization and/or privacy verification information may be included. The indication may be one indication of the UE policy request included in the UE policy container or a standalone indication, which is not limited.

In step 4, the authorization and/or privacy verification information is transmitted based on the UE configuration update procedure for the transparent UE policy delivery.

If the PCF determines to initiate the UE policy association modification procedure (UE Policy Association Modification initiated by the PCF), it may include the following steps.

In step 1b, authorization and/or privacy verification information is updated.

In step 2b, a UE policy association update notification request message is sent.

In some embodiments, the UE policy association update notification request message may be, for example, an Npcf_UEPolicyControl _UpdateNotify Request, which is not limited.

In step 3b, a UE policy association update notification response message is sent.

In some embodiments, the UE policy association update notification response message may be, for example, an Npcf_UEPolicyControl_UpdateNotify Response, which is not limited.

In step 4, the authorization and/or privacy verification information is transmitted based on the UE configuration update procedure for the transparent UE policy delivery.

In some embodiments, privacy auth info may be carried in the UE configuration update procedure for the transparent UE policy delivery to send privacy auth info to the terminal, which is not limited.

In some embodiments, the policy control request trigger conditions for provisioning privacy authentication information met in the PCF are as follows.

In some embodiments, in step 1b, the PCF decides to update the UE policy association to provide authorization and/or privacy verification information. For example, the AF may request to update (to request or to invalidate or to update the content) the authorization and/or privacy verification information after the UE Policy Association Establishment due to the capability change or related trigger condition change, or the PCF decides to update the authorization and/or privacy verification information based on the local policy change, which is not limited.

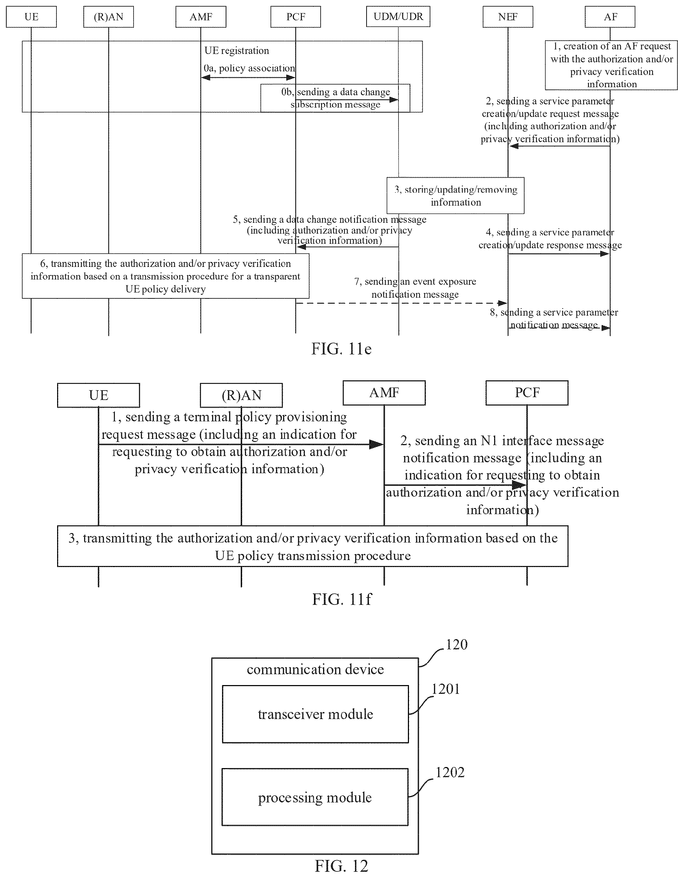

FIG. 11e is a schematic diagram of the interaction flow of a service specific parameter provisioning procedure provided in an embodiment of the present disclosure. Taking a UE as the terminal as an example, the interaction diagram of the UE, an R(AN), an AMF, a PCF, a UDM/UDR, an NEF and an AF is shown, which is not limited. In this embodiment, authorization and/or privacy verification information may be provided based on the service specific parameter provisioning procedure, which is not limited.

In this embodiment, if the authorization and/or privacy verification information is configured by the application, the information may be provisioned to the UE via the network based on the service specific parameter provisioning procedure, which is not limited.

In step 0a, policy association.

In some embodiments, the policy association may be, for example, a policy association, which is not limited.

In step 0b, the PCF sends a data change subscription message to the UDM/UDR.

In some embodiments, the data change subscription message is, for example, Nudr_DM_Subscribe, which is not limited.

In step 1, creation of an AF request with the authorization and/or privacy verification information.

In step 2, a service parameter creation/update request message (including authorization and/or privacy verification information) is sent.

In some embodiments, the service parameter creation/update request message may be, for example, Nnef_ServiceParameter_Create/Update, and may contain privacy auth info, which is not limited.

In step 3, storing/updating/removing information.

In some embodiments, storing/updating/removing information may be, for example, Storing/Updating/Removing the information, which is not limited.

In step 4, a service parameter creation/update response message is sent.

In some embodiments, the service parameter creation/update response message may be, for example, an Nnef_ServiceParameter_Create/Update Response, which is not limited.

In step 5, a data change notification message (including authorization and/or privacy verification information) is sent.

In some embodiments, the data change notification message may be, for example, Nudr_DM_Notify, which is not limited.

In step 6, the authorization and/or privacy verification information is transmitted based on a transmission procedure for a transparent UE policy delivery.

In step 7, an event exposure notification message is sent.

In some embodiments, the event exposure notification message may be, for example, Npcf_EventExposure_Notify, which is not limited.

In step 8, a service parameter notification message is sent.

In some embodiments, the service parameter notification message may be, for example, Nnef_ServiceParameter_Notify, which is not limited.

Examples are given below.

In some embodiments, in steps 1 to 3, the AF may create or update authorization and/or privacy verification information, and the created or updated authorization and/or privacy verification information may be sent to the NEF and stored in the UDR, which is not limited.

In some embodiments, in step 5, the authorization and/or privacy verification information may be notified to the PCF, which is not limited.

In some embodiments, in step 6, the UE Configuration Update procedure for transparent UE Policy delivery is used to send the authorization and/or privacy verification information to the UE.

In some embodiments, in the interaction flow shown in FIG. 11e, the PCF network element may be disregarded, and the UDM/UDR may directly provide authorization and/or privacy verification information to the AMF, which is not limited.

FIG. 11f is a schematic diagram of the interaction flow of a terminal trigger configuration process provided in an embodiment of the present disclosure. Taking a UE as the terminal as an example, the interaction diagram of the UE, an R(AN), an AMF, and a PCF is shown, which is not limited. In this embodiment, the UE triggers the transmission of proximity services (ProSe) policy for privacy verification information, which is not limited.

In this embodiment, the terminal may also obtain authorization and/or privacy verification information by a configuration procedure triggered by the terminal, e.g., using a Proximity Service Policy (ProSe Policy) configuration procedure triggered by the terminal.

In step 1, a terminal policy provisioning request message (including an indication for requesting to obtain authorization and/or privacy verification information) is sent.

In some embodiments, the terminal policy provisioning request message may be, for example, a UE Policy provisioning request, and the UE Policy provisioning request may include privacy auth info required, which is not limited.

In step 2, an N1 interface message notification message (including an indication for requesting to obtain authorization and/or privacy verification information) is sent.

In some embodiments, the N1 interface message notification message is, for example, Namf_Communication_N1MessageNotify, and the Namf_Communication _N1MessageNotify may contain privacy auth info required, which is not limited.

In step 3, the authorization and/or privacy verification information is transmitted based on the UE policy transmission procedure.

Examples are given below.

In step 1, the terminal sends, to the AMF, a UL NAS TRANSPORT message carrying a terminal policy provisioning request message with requested UE policies (which may be, for example, a terminal policy provisioning request message for requesting 5G ProSe policies including an indication for requesting to obtain authorization and/or privacy verification information). The terminal policy provisioning request message may include an indication for requesting to obtain authorization and/or privacy verification information. This indication may be one indication of the UE policy request included in the requested UE policies or a standalone indication.

In step 2, the AMF sends an Namf_Communication _N1MessageNotify request to the PCF, which may include an indication received from the UE for requesting to obtain authorization and/or privacy verification information.

In step 3, if the authorization and/or privacy verification information is authorized based on the input from the AMF, the information may be transmitted to the terminal based on the UE configuration update procedure for the transparent UE policy delivery.

In some embodiments, the authorization and/or privacy verification information may be organized as part of UE policy information and transmitted from the PCF to the AMF and the UE as part of the UE policy, as described in the steps of the above procedures, which is not limited.

In some embodiments, the authorization and/or privacy verification information may be organized into separate authorization and/or privacy verification information that may be transmitted by the PCF reuse UE policy transmission procedure with new information, which is not limited.

In some embodiments, the authorization and/or privacy verification information may be passed from the UDM to the AMF, for example, when retrieving user subscription data from the UDM using Nudm_SDM_Get or Nudm_SDM_Subscribe messages during the registration procedure, or may be passed to the terminal during the registration procedure, the terminal configuration update procedure, and the service specific parameter provisioning procedure, which is not limited.

In some embodiments, the UDM may notify the information to the AMF instead of the PCF and then send the information to the terminal, for example, using the terminal configuration update procedure, which is not limited.

In the embodiments of the present disclosure, the AF may provide or update the authorization and/or privacy verification information of the terminal; and/or the PCF may provide or update the authorization and/or privacy verification information of the terminal; and/or the UDR may receive and store the authorization and/or privacy verification information of the terminal; and/or the AMF may provide or update the authorization and/or privacy verification information of the terminal; and/or the AMF may decide to provide the terminal with the authorization and/or privacy verification information based on the request from the terminal or local policies, which is not limited.

In the embodiments of the present disclosure, the terminal may request and receive the authorization and/or privacy verification information provided by the network; and/or the terminal may update the authorization and/or privacy verification information provided by the network; and/or the terminal may request or update the authorization and/or privacy verification information provided by the AF via the network, which is not limited.

FIG. 12 is a schematic block diagram of a communication device provided in an embodiment of the present disclosure. The communication device 120 shown in FIG. 12 may include a transceiver module 1201 and a processing module 1202. The transceiver module 1201 may include a sending module and/or a receiving module. The sending module is configured to implement the sending function, and the receiving module is configured to implement the receiving function. The transceiver module 1201 may implement the sending function and/or the receiving function.

The communication device 120 may be a network element (such as the first network element, the second network element, the third network element, and the fifth network element in the aforementioned method embodiments), or a device within a network element, or a device that may be used in conjunction with a network element. Alternatively, the communication device 120 may be a terminal, or a device within a terminal, or a device that may be used in conjunction with a terminal.

The communication device 120, on the first network element side, includes a transceiver module 1201 configured to send authorization and/or privacy verification information to a second network element, where the authorization and/or privacy verification information is used by a terminal to perform authorization and privacy verification for ranging or SL positioning.

The communication device 120, on the second network element side, includes a transceiver module 1201 configured to send authorization and/or privacy verification information to a terminal, where the authorization and/or privacy verification information is used by the terminal to perform authorization and privacy verification for ranging or SL positioning.

The communication device 120, on the third network element side, includes a transceiver module 1201 configured to send authorization and/or privacy verification information to a first network element or a third network element, where the authorization and/or privacy verification information is used by a terminal to perform authorization and/or privacy verification for ranging or SL positioning, and the first network element has subscribed to a change notification for the authorization and/or privacy verification information.

The communication device 120, on the terminal side, includes a transceiver module 1201 configured to receive authorization and/or privacy verification information sent by a second network element, where the authorization and/or privacy verification information is used by the terminal to perform authorization and privacy verification for ranging or SL positioning.

The communication device 120, on the fifth network element side, includes a processing module 1202 configured to generate or update authorization and/or privacy verification information, where the authorization and/or privacy verification information is used by a terminal to perform authorization and privacy verification for ranging or SL positioning.

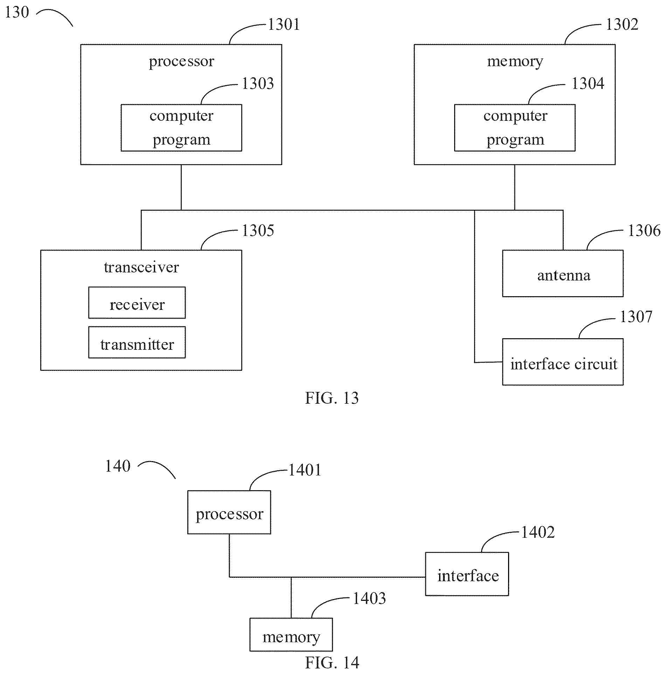

FIG. 13 is a schematic block diagram of another communication device provided in an embodiment of the present disclosure. The communication device 130 may be a network element (such as the first network element, the second network element, the third network element, and the fifth network element in the aforementioned method embodiments), or the communication device 130 may be a chip, chip system, or processor that supports the network element to implement the above methods. The communication device 130 may be a terminal, or a chip, chip system, or processor that supports the terminal to implement the above methods. The communication device 130 may be configured to implement the methods as described in the above-mentioned method embodiments. For details, reference may be made to the description in the above-mentioned method embodiments.

The communication device 130 may include one or more processors 1301. The processor 1301 may be a general-purpose processor, a special-purpose processor, or the like. The processor 1301 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 130 may further include one or more memories 1302 on which a computer program 1304 may be stored, and the processor 1301 may have stored therein a computer program 1303. The processor 1301 executes the computer program 1304 and/or the computer program 1303 to cause the communication device 130 to perform the methods as described in the above-mentioned method embodiments.

Optionally, the memory 1302 may also have data stored therein. The communication device 130 and the memory 1302 may be provided independently or integrated together.

Optionally, the communication device 130 may further include a transceiver 1305 and an antenna 1306. The transceiver 1305 may be referred to as a transceiving unit, a transceiving device, a transceiving circuit or the like for implementing a transceiving function. The transceiver 1305 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 130 may further include one or more interface circuits 1307. The interface circuit 1307 is configured to receive and transmit code instructions to the processor 1301. The processor 1301 is configured to run the code instructions to enable the communication device 130 to perform the methods described in the above-mentioned method embodiments.

In an implementation, the processor 1301 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1301 may have stored therein the computer program 1303 that, when running on the processor 1301, enables the communication device 130 to perform the methods described in the above-mentioned method embodiments. The computer program 1303 may be embedded in the processor 1301, in which case the processor 1301 may be implemented by hardware.

In an implementation, the communication device 130 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, or the like. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), or the like.

The communication device described in the above embodiments may be a network element (such as the first network element, the second network element, the third network element, and the fifth network element in the aforementioned method embodiments) or a terminal, but the scope of the communication device described in the present disclosure is not limited thereto. The structure of the communication device may not be limited by FIG. 13. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

For the case where the communication device may be a chip or a chip system, reference is made to FIG. 14, which is a schematic block diagram of a chip provided in an embodiment of the present disclosure. The chip shown in FIG. 14 includes a processor 1401 and an interface 1402. The number of the processors 1401 may be one or more, and the number of the interfaces 1402 may be multiple.

For the case where the chip is configured to implement the functions of the network element in the embodiments of the present disclosure, the following applies.

The processor 1401 is configured to implement the various steps in FIGS. 2-8 and 10-11 above.

For the case where the chip is configured to implement the functions of the terminal in the embodiments of the present disclosure, the following applies.

The processor 1401 is configured to implement the various steps in FIGS. 9 and 11 above.

Optionally, the chip further includes a memory 1403 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of the embodiments of the present disclosure.

An embodiment of the present disclosure further provides a communication system, which includes the communication device in the above embodiments as a network element, or includes the communication device in the above embodiment of FIG. 13 as a network element and the communication device in the above embodiments as a terminal, or the communication device in the above embodiment of FIG. 13 as a terminal.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of the embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first," "second," "third," "A," "B," "C," "D," and the like, and these technical features described with the terms "first," "second," "third," "A," "B," "C" and "D" have no order of precedence or size.

The corresponding relationships shown in the tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, also referred to as device-to-device (D2D) communication, vehicle-to-everything (V2X) communication, or the like). In this case, the terminal may be configured to have all or some of the functions of the access network device. Furthermore, the words such as "uplink" and "downlink" may be replaced with words corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, determining may be interpreted as judging, deciding, judging, calculating, computing, processing, deriving, investigating, seeking, looking up, searching, querying, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, and the like, but is not limited thereto.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. An information sending method, performed by a first network element and comprising:
sending authorization and/or privacy verification information to a second network element, wherein the authorization and/or privacy verification information is used by a terminal to perform authorization and privacy verification for ranging or sidelink (SL) positioning.

2. The method according to claim 1, wherein sending the authorization and/or privacy verification information to the second network element comprises:
receiving a first request message sent by the second network element, wherein the first request message is used to request to obtain or update the authorization and/or privacy verification information;
determining that a first condition is satisfied, sending the authorization and/or privacy verification information to the second network element.

3. The method according to claim 2, wherein determining that the first condition is satisfied comprises at least one of:
determining to request to obtain the authorization and/or privacy verification information based on local information;
determining to update the authorization and/or privacy verification information based on local information;
determining that the terminal requests to obtain the authorization and/or privacy verification information;
determining that the terminal requests to update the authorization and/or privacy verification information; or
determining to update the authorization and/or privacy verification information of the terminal based on a notification from a third network element.

4. The method according to any one of claims 2 to 3, wherein the first request message comprises any one of:
first information, wherein the first information is used to request to obtain or update the authorization and/or privacy verification information; or
a terminal policy request parameter, wherein the terminal policy request parameter comprises first information.

5. The method according to any one of claims 2 to 4, wherein the first request message is at least one of:
a user equipment (UE) policy association establishment request message;
a UE policy association update request message; or
an N1 interface message notification message.

6. The method according to any one of claims 1 to 5, further comprising:
receiving the authorization and/or privacy verification information sent by the third network element, wherein the first network element has subscribed to a change notification for the authorization and/or privacy verification information.

7. The method according to claim 6, wherein the change notification for the authorization and/or privacy verification information is triggered by at least one of:
a user data update locally configured by a network; or
a user data update triggered by a fifth network element.

8. The method according to any one of claims 1 to 7, further comprising:
sending a second request message to the third network element, wherein the second request message is used to request to obtain or update the authorization and/or privacy verification information from the third network element;
receiving the authorization and/or privacy verification information sent by the third network element in response to the second request message.

9. An information sending method, performed by a second network element and comprising:
sending authorization and/or privacy verification information to a terminal, wherein the authorization and/or privacy verification information is used by the terminal to perform authorization and privacy verification for ranging or sidelink (SL) positioning.

10. The method according to claim 9, further comprising:
sending a first request message to a first network element, wherein the first request message is used to request to obtain or update the authorization and/or privacy verification information;
receiving the authorization and/or privacy verification information sent by the first network element.

11. The method according to any one of claims 9 to 10, wherein the first request message comprises any one of:
first information, wherein the first information is used to request to obtain or update the authorization and/or privacy verification information; or
a terminal policy request parameter, wherein the terminal policy request parameter comprises first information.

12. The method according to any one of claims 9 to 11, wherein the first request message is at least one of:
a user equipment (UE) policy association establishment request message;
a UE policy association update request message; or
an N1 interface message notification message.

13. The method according to any one of claims 9 to 12, further comprising:
receiving the authorization and/or privacy verification information sent by a third network element, wherein the second network element has subscribed to a change notification for the authorization and/or privacy verification information.

14. The method of claim 13, wherein the change notification for the authorization and/or privacy verification information is triggered by at least one of:
a user data update locally configured by a network; or
a user data update triggered by a fifth network element.

15. The method according to any one of claims 9 to 12, further comprising:
sending a second request message to a fourth network element, wherein the second request message is used to request to obtain or update the authorization and/or privacy verification information from the fourth network element, and the authorization and/or privacy verification information is obtained by the fourth network element from a third network element, or pushed to the fourth network element by a third network element;
receiving the authorization and/or privacy verification information sent by the fourth network element in response to the second request message.

16. The method according to any one of claims 9 to 12, further comprising:
receiving a third request message sent by the terminal, wherein the third request message is used to request to obtain or update the authorization and/or privacy verification information, and the third request message comprises at least one of:
second information, wherein the second information is used to request to obtain or update the authorization and/or privacy verification information; or
a terminal policy request parameter, wherein the terminal policy request parameter comprises second information.

17. The method according to claim 16, wherein the third request message is at least one of:
a registration request message; or
a terminal policy provisioning request message.

18. The method according to any one of claims 9 to 17, wherein sending the authorization and/or privacy verification information to the terminal comprises:
transparently transmitting the authorization and/or privacy verification information to the terminal via at least one of the following messages between the terminal and the second network element:
a UE configuration update procedure based on a transparent UE policy delivery;
a UE configuration update procedure; or
a registration response message.

19. An information sending method, performed by a third network element and comprising:
sending authorization and/or privacy verification information to a first network element or a fourth network element, wherein the authorization and/or privacy verification information is used by a terminal to perform authorization and/or privacy verification for ranging or sidelink (SL) positioning, and the first network element has subscribed to a change notification for the authorization and/or privacy verification information.

20. The method according to claim 19, further comprising:
sending the authorization and/or privacy verification information to a second network element via the fourth network element, wherein the second network element has subscribed to the change notification for the authorization and/or privacy verification information.

21. The method according to any one of claims 19 to 20, wherein the change notification for the authorization and/or privacy verification information is triggered by at least one of:
a user data update locally configured by a network; or
a user data update triggered by a fifth network element.

22. The method according to claim 19, further comprising:
receiving a second request message sent by the first network element or sent by a second network element via the fourth network element, wherein the second request message is used to request to obtain or update the authorization and/or privacy verification information from the third network element;
sending the authorization and/or privacy verification information to the first network element or to the second network element via the fourth network element in response to the second request message.

23. An information acquiring method, performed by a fifth network element and comprising:
generating or updating authorization and/or privacy verification information, wherein the authorization and/or privacy verification information is used by a terminal to perform authorization and privacy verification for ranging or sidelink (SL) positioning.

24. The method according to claim 23, further comprising:
storing the authorization and/or privacy verification information in a third network element;
sending a change notification for the authorization and/or privacy verification information to trigger the third network element to send the authorization and/or privacy verification information to a first network element or to trigger a fourth network element to send the authorization and/or privacy verification information to a second network element, wherein the change notification for the authorization and/or privacy verification information has been subscribed to by the first network element or the second network element.

25. A communication device, comprising:
a transceiver module configured to send authorization and/or privacy verification information to a second network element, wherein the authorization and/or privacy verification information is used by a terminal to perform authorization and privacy verification for ranging or sidelink (SL) positioning.

26. A communication device, comprising:
a transceiver module configured to send authorization and/or privacy verification information to a terminal, wherein the authorization and/or privacy verification information is used by the terminal to perform authorization and privacy verification for ranging or sidelink (SL) positioning.

27. A communication device, comprising:
a transceiver module configured to send authorization and/or privacy verification information to a first network element or a fourth network element, wherein the authorization and/or privacy verification information is used by a terminal to perform authorization and/or privacy verification for ranging or sidelink (SL) positioning, and the first network element has subscribed to a change notification for the authorization and/or privacy verification information.

28. A communication device, comprising:
a processing module configured to generate or update authorization and/or privacy verification information, wherein the authorization and/or privacy verification information is used by a terminal to perform authorization and privacy verification for ranging or sidelink (SL) positioning.

29. A communication device, comprising:
one or more processors,
wherein the one or more processors are configured to call instructions to cause the communication device to perform the method of any one of claims 1 to 24.

30. A computer-readable storage medium for storing instructions that, when executed, cause the method according to any one of claims 1 to 24 to be implemented.
